(19) **Europäisches Patentamt**

**European Patent Office**

**Office européen des brevets**

(11) **EP 0 953 003 B1**

(12) **EUROPÄISCHE PATENTSCHRIFT**

(45) Veröffentlichungstag und Bekanntmachung des Hinweises auf die Patenterteilung:
**24.10.2001 Patentblatt 2001/43**

(21) Anmeldenummer: **97952895.7**

(22) Anmeldetag: **08.12.1997**

(51) Int Cl.⁷: **C08G 75/02**, B03C 7/00

(86) Internationale Anmeldenummer:
**PCT/EP97/06837**

(87) Internationale Veröffentlichungsnummer:
**WO 98/27139 (25.06.1998 Gazette 1998/25)**

(54) **VERFAHREN ZUR TRENNUNG VON POLYMER-SALZ-GEMISCHEN**

METHOD FOR SEPARATING POLYMER-SALT MIXTURES

PROCEDE POUR LA SEPARATION DE MELANGES POLYMERES-SELS

(84) Benannte Vertragsstaaten:
**DE FR GB IT**

(30) Priorität: **19.12.1996 DE 19653011**

(43) Veröffentlichungstag der Anmeldung:
**03.11.1999 Patentblatt 1999/44**

(73) Patentinhaber: **Ticona GmbH**
**65451 Kelsterbach (DE)**

(72) Erfinder:
• **SCHÖNERT, Klaus**
**D-38678 Clausthal-Zellerfeld (DE)**
• **WAGENER, Reinhard**
**D-65439 Flörsheim (DE)**
• **SEMEL, Joachim**
**D-61462 Königstein (DE)**

(56) Entgegenhaltungen:
**DE-A- 4 222 870          US-A- 5 118 407**

• **PATENT ABSTRACTS OF JAPAN vol. 096, no. 010, 31.Oktober 1996 & JP 08 155340 A (DENSEN SOGO GIJUTSU CENTER), 18.Juni 1996,**

**Beschreibung**

Die Erfindung betrifft ein Verfahren zur Trennung von partikel- oder pulverförmigen Gemischen aus organischen Polymeren und Salzen, insbesondere schwefelhaltigen Polymeren und Halogeniden oder Carboxylaten der Alkali- und Erdalkalimetalle.

Bei der Herstellung von Polymeren durch Polykondensation entstehen häufig, z. B. in einer anschließenden Neutralisationsreaktion, Salze als Nebenprodukte. Dies gilt u. a. auch für die Herstellung von Polyphenylensulfid (PPS) aus Natriumsulfid und para-Dichlorbenzol in einem polaren Lösemittel gemäß der vereinfachten Reaktionsgleichung

$$Na_2S + C_6H_4Cl_2 \longrightarrow [-C_6H_4-S-] + 2\ NaCl$$

Nach einem bekannten Verfahren wird die nach der Reaktion vorliegende Mischung aus Lösemittel, Polymer und Salz einer Entspannungsverdampfung zur Entfernung des Lösemittels unterzogen und ein Feststoffgemisch aus Polymer und Salz erhalten. Daraus wird das Salz durch Auswaschen mit Wasser und anschließende Filtration des Polymers aus dem Waschwasser entfernt. Diese und verwandte Verfahren haben jedoch den Nachteil, daß große Mengen salzhaltigen Abwassers anfallen.

Für die Salzabtrennung von PPS und einem polaren Lösemittel wird in EP-0 220 490 eine heiße Filtration oder Zentrifugation bei Temperaturen von über 210 °C beschrieben. Diese Verfahrensweise erfordert jedoch in der technischen Umsetzung für diesen Temperaturbereich Sonderkonstruktionen für Filterapparate oder Zentrifugen. Insbesondere bereitet die Abdichtung der Apparate gegen die verwendeten polaren Lösemittel bei T > 210 °C Probleme.

Es bestand daher ein Bedürfnis nach einem Verfahren zur Abtrennung von Salzen von organischen Polymeren, das bei moderaten Temperaturen arbeitet und keine großen Abwasserströme generiert.

Es war bekannt, unterschiedliche Kunststoffe mittels triboelektrischer Trennung, das heißt durch Trennung geladener Partikel in einem statischen elektrischen Feld nach deren Aufladung durch Reibung untereinander oder mit Apparatebauteilen, voneinander zu trennen. Sie wird beispielsweise in DE-C-3 035 649 und in DE-C-4 225 977 vorgeschlagen für die Trennung chemisch verschiedener Kunststoffe innerhalb eines Recyclingprozesses. Bei den dort verwendeten Einsatzmaterialien handelt es sich um mechanisch zerkleinerte Formteile aus Kunststoffen. Typische Korngrößen liegen im Bereich einiger Millimeter bis herunter zu Bruchteilen eines Millimeters, reichen aber nicht herunter bis in den Feinstkornbereich von beispielsweise kleiner 200 µm. Für die triboelektrische Trennung rein anorganisch mineralischer Feststoffe im Feinstkornbereich wurde in Powder Technology 86 (1996), 41-47 eine Apparatur vorgeschlagen.

Überraschend wurde gefunden, daß die triboelektrische Trennung auch für Feststoffgemische aus organischen Polymeren und Salzen im Feinstkornbereich bis zu d = 10 µm sehr gute Ergebnisse liefert.

Gegenstand der Erfindung ist somit ein Verfahren zur triboelektrischen Trennung von organischen Polymeren und Salzen, insbesondere zur Trennung solcher Mischungen von organischen Polymeren und Salzen mit mittleren Korndurchmessern ≤ 200 µm.

Gemäß einer bevorzugten Ausführungsform betrifft die Erfindung ein Verfahren zur Trennung von schwefelhaltigen Polymeren von Salzen, insbesondere von den Halogeniden oder Carboxylaten der Alkali- oder Erdalkalimetalle.

Der Begriff organisches Polymer schließt hier grundsätzlich alle bekannten makromolekularen, vorwiegend organischen Werkstoffe ein. Von besonderer Relevanz ist das erfindungsgemäße Verfahren für solche Polymere, die in einem Polykondensationsprozeß unter direkter Bildung von Salzen oder nachträglich zu neutralisierender Säuren oder Basen hergestellt werden. Beispiele für solche Prozesse sind die Herstellung von Polyaramiden aus Diaminen und Disäurechloriden, von Polycarbonaten aus Diphenolen oder Diphenolaten mit Phosgen, von Polysulfonen, Polyethersulfonen oder Polyetherketonen aus Diphenolaten und dihalogenierten aromatischen Kohlenwasserstoffen oder die Herstellung von Polyarylensiloxanen aus Diaryldichlorsilanen mit Diphenolaten. Insbesondere schließt der Begriff schwefelhaltige Polymere ein.

Schwefelhaltige Polymere sind vorzugsweise Polymere, die Arylensulfid-Einheiten enthalten. Die Arylen-Bestandteile der Arylensulfid-Einheiten enthalten ein- oder mehrkernige Aromaten oder verbundene Aromaten. Die Aromaten können auch Heteroatome enthalten. Solche Aromaten, die substituiert oder unsubstituiert sein können, sind beispielsweise Benzol, Pyridin, Biphenyl, Naphthalin, Phenanthren. Substituenten sind zum Beispiel C1-C6-Alkyl-, C1-C6-Alkoxy-, Carboxyl-, Amino- und Sulfonsäure-Gruppen. Verbundene Aromaten sind zum Beispiel Biphenyl oder durch Etherbrücken verbundene Aromaten (Arylenether). Bevorzugte schwefelhaltige Polymere sind Polyarylensulfide, insbesondere Polyphenylensulfid.

Salze können organisch oder anorganisch sein, das heißt aus einer beliebigen Kombination organischer oder anorganischer Kationen mit organischen oder anorganischen Anionen bestehen. Typische Vertreter anorganischer Salze sind die häufig als Nebenprodukt einer Polykondensation entstehenden Halogenide der Alkali- oder Erdalkalimetalle. Typische Vertreter organischer Salze sind Carboxylate der Alkalimetalle, der Erdalkalimetalle, des Ammoniums oder organisch substituierter Ammoniumkationen, die nach dem Stand der Technik zum Beispiel bei der Herstellung schwefelhaltiger Polymere als Promotoren eingesetzt werden. Unter Carboxylaten sind hierbei die Salze aliphatischer Carbonsäuren, wie z.B. der Essigsäure oder Propionsäure, oder aromatischer Carbonsäuren, beispielsweise der Benzoesäure, oder auch Salze polyfunktioneller Carbonsäuren zu verstehen.

Die erfindungsgemäße triboelektrische Trennung von organischen Polymeren und Salzen wird ausgeführt, indem

a) das zu trennende Gemisch elektrisch aufgeladen wird,

b) die aufgeladenen Partikel in einem elektrischen Feld vorzugsweise senkrecht zur Feldrichtung durch die Schwerkraft oder mittels einer Strömung bewegt werden und

c) die im elektrischen Feld unterschiedlich abgelenkten Partikel getrennt aufgefangen werden.

Als Einsatzmaterial für das erfindungsgemäße Verfahren eignen sich rieselfähige Feststoffgemische aus einem oder mehreren Polymeren und einem oder mehreren Salzen. Die Zusammensetzung kann dabei über den gesamten Bereich von 0 bis 100 Gew.% Polymer bzw. von 100 bis 0 % Salz reichen. Solche Gemische können beispielsweise durch die Aufarbeitung einer Reaktionssuspension nach den Schritten Kristallisation, Filtration oder Zentrifugation, Waschen und Trocken oder in einer Sprühtrocknung oder Entspannungsverdampfung entstehen. Das erfindungsgemäße Verfahren liefert über einen weiten Bereich von Korngrößen sehr gute Ergebnisse. Besonders vorteilhaft wird das Verfahren zur Trennung von Gemischen im Feinstkornbereich von d < 200 µm bis herab zu d ≥ 10 µm angewendet. Gemische in diesem Korngrößenbereich entstehen häufig bei der Herstellung temperaturbeständiger Polymere wie beispielsweise der Poly(ether)sulfone und -ketone und insbesondere der schwefelhaltigen Polymere, die sich nur bei hohen Prozeßtemperaturen lösen und deren Kristallisation deshalb nicht leicht zu kontrollieren ist.

Die statische Aufladung kann grundsätzlich nach bekannten Verfahren in Fließ- oder Wirbelbetten, in einer Schwingkammer oder in einem Auflader mit rotierenden Elementen, beispielsweise einem Bürstenrotor, geschehen. In einer bevorzugten Ausführungsform der Erfindung wird das Feststoffgemisch in einer Bürstenkammer aufgeladen. Das durch einen Trichter in ein Förderrohr gefüllte Feststoffgemisch wird durch eine Förderschnecke kontinuierlich gegen eine rotierende Bürste geschoben, die das Material über der gesamten Querschnittsfläche des Förderrohrs kontinuierlich abträgt, entlang der Bürstenkammerwand mitführt und durch die Kontaktierung der Partikeln untereinander sowie mit der Wand die Triboaufladung bewirkt. Gute Ergebnisse werden mit einer Stahlkammer und einer Stahlbürste erzielt. Die Kammer kann auch aus anderen Materialien, beispielsweise dem abzutrennenden Polymer, bestehen. Für die Bürste können ebenfalls andere Materialien wie Polyamide oder Kohlefasern eingesetzt werden.

Auf der Gegenseite der Bürste wird vorzugsweise durch eine schmale Schlitzdüse ein Trägergas mit hoher Geschwindigkeit eingeblasen, die das Material austrägt. Wählt man eine andere Anordnung zur triboelektrischen Aufladung wird das Material vorzugsweise in grundsätzlich gleicher Weise in einem Trägergasstrom dispergiert. Als Trägergase eignen sich beispielsweise Luft oder Stickstoff. Man erhält so einen Staubstrom mit geladenen Feststoffpartikeln.

Die Vorschubgeschwindigkeit des Kolbens, der Durchmesser des Materialaufgaberohres, der Bürstendurchmesser, die Bürstendrehzahl, die Zusammensetzung, relative Feuchte und Geschwindigkeit des Trägergasstroms sind nach Bedarf in weiten Grenzen variierbar und führen damit zu einer großen Variabilität in der Feststoffbeladung des Staubstromes und der elektrischen Ladungsdichte des Staubes.

Falls erforderlich, kann das zu trennende Gemenge erwärmt werden. Eine Erwärmung des Gemenges vor der Trennung kann insbesondere bei hoher Luftfeuchtigkeit der Umgebung von Vorteil sein.

Vorzugsweise wird das Gemenge dabei mit üblichen Mitteln auf 25 - 80 °C, insbesondere 35 - 60 °C erwärmt.

Die Trennung kann grundsätzlich mit allen für die triboelektrische Trennung geeigneten Vorrichtungen durchgeführt werden.

Die eigentliche Trennung des Feststoffgemischs erfolgt dabei beim Durchtritt durch ein statisches elektrisches Feld im freien Fall oder in einer gerichteten Gasströmung. Vorzugsweise erfolgt der Durchtritt für das erfindungsgemäße Verfahren senkrecht zur Feldrichtung.

Die hierzu erforderlichen Elektroden können nach dem Stand der Technik unter anderem als Plattenelektroden, Jalousieelektroden, Röhrenelektroden oder Bandelektroden ausgebildet werden.

Gemäß einer bevorzugten Ausführungsform der Erfindung wird ein Walzenscheider eingesetzt, wie er beispielsweise in Powder Technology, 86 (1986), S. 41-47 beschrieben ist. Dem Walzenscheider wird der Staubstrom mittig über eine Schlitzdüse zugeführt. Die verwendeten Trennelektroden weisen eine zylindrische Form mit konvex gekrümmten Oberflächen auf. In einer bevorzugten Ausführungsform der Erfindung haben sie einen elliptischen Querschnitt und sind jeweils in die der Fallstrecke zugewandten Seite eines Isolationskörpers, z. B. aus Polytetrafluorethen, eingebettet. Damit sind prinzipiell Feldstärken oberhalb der Durchbruchsfeldstärke im Trägergas möglich. Über den Elektrodenoberflächen befinden sich drehbar gelagerte Abscheidewalzen, z.B. aus Polycarbonat, die um den Isolationskörper rotieren. Sie werden vorzugsweise von einem regelbaren Gleichstrommotor über ein Zahnradgetriebe auf der Rückseite des Scheiders angetrieben. Die Partikel lagern sich je nach Ladungsvorzeichen unter dem Einfluß des elektrischen Feldes auf den rotierenden Walzen ab, bleiben dort haften und werden aus der Trennzone heraus in den Bereich der Abstoßelektroden befördert, welche in die Rückseite der Isolationskörper eingebettet sind. Die Abstoßelektroden besitzen wie die Trennelektroden einen zylindrischen bzw. elliptischen Querschnitt mit gleichem Achsenverhältnis, sind aber entgegengesetzt aufgeladen. Hierdurch wird bewirkt, daß die an den Walzen anhaftenden Partikeln gleichen Ladungsvorzeichens abgestoßen werden. Zur weiteren Reinigung der Walzenoberflächen dienen auf Erdpotential liegende mechanische Vorrichtungen wie Schaber oder Bürsten. Der separierte Feststoff wird schließlich in einen Auffangbehälter gesammelt. Das Mittelgut, welches an keiner der beiden Trennelektroden abgeschieden wurde, wird nach Durchtritt durch die Fallstrecke abgesaugt und dem triboelektrischen Scheider erneut von oben zugeführt.

Die für die Trennung angelegte Feldstärke liegt vorzugsweise im Bereich von 0,1-30 MV/m, insbesondere von 1 - 5 MV/m.

Die triboelektrische Trennung kann einstufig oder aber zur Erzielung besonders hoher Produktreinheiten auch mehrstufig geführt werden.

Bei mehrstufiger Sortierung unterscheidet man zwischen

-   Vorsortierung in der ersten Stufe, auch als "Rougher" bezeichnet,
-   Reinigung in der "Cleaner" - Stufe,
-   Nachsortierung in der "Scavenger" - Stufe.

Der Rougher erzeugt zwei Produkte, in denen jeweils das Polymer bzw. Salz angereichert sind. Diese beiden Produkte werden hier mit Rohpolymer und Rohsalz bezeichnet. Das Rohpolymer wird in den Cleanerstufen gereinigt, dabei wird immer Polymer mit der Salzfraktion (Cleanersalz) verloren. Zur Vermeidung solcher Verluste kann das Cleanersalz in den Rougher zurück geführt werden. Der Scavenger gewinnt das im Rohsalz verbliebene Polymer. Die Polymerfraktion des Scavengers wird üblicherweise ebenfalls zum Rougher zurückgeführt. Die Cleaner- und Scavengerstufen können mehrstufig ausgelegt werden. Der Cleaner bestimmt die Reinheit des Polymers und der Scavenger die Verluste an Polymer.

Es besteht auch die Möglichkeit, daß sich im Cleaner oder Scavenger die gewünschte Komponente im sogenannten Mittelgut anreichert und dieses als Produkt ausgetragen wird, während die an den Elektroden abgezogenen Fraktionen dem Mittelgutumlauf des Roughers zugeführt werden.

Beispiele:

Beispiel 1:

Für die triboelektrische Trennung wurden folgende Proben eingesetzt:

Fortron® , ein Polyphenylensulfid erhältlich von der Fa. Fortron Industries, North Carolina, U.S.A.. Die Probe wies folgende Korngrößenverteilung auf:

$d_{10} = 47\ \mu m$     $d_{50} = 72\ \mu m$     $d_{90} = 106\ \mu m$

Hier bedeutet $d_{xx}$ denjenigen Korndurchmesser, unterhalb dessen der Durchmesser von xx % der Gesamtprobe liegt. Diese Probe wird im folgenden mit Fortron G (FG) bezeichnet.

Außerdem Natriumchlorid mit der Korngrößenverteilung:

$d_{10} = 21\ \mu m$     $d_{50} = 50\ \mu m$     $d_{90} = 78\ \mu m$

Diese Probe wird mit Salz G (SG), bezeichnet.

Tabelle 1 gibt die Versuchsergebnisse zur triboelektrischen Trennung von Gemischen dieser Substanzen in den massenbezogenen Mischungsverhältnissen FG/SG = 50:50, FG/SG = 90:10 und FG/SG = 10:90 im Aufgabestrom wieder. Hierbei bedeuten die Abkürzungen:

| v | mittlere Eintrittsgeschwindigkeit der Luft in die Bürstenkammer [m/s] |
| U | angelegte Gleichspannung [kV] |
| F | Fortron |
| S | Salz |
| M+,Mm,M- | prozentualer Massenanteil des positiv geladenen, Mittel- und negativ geladenen Guts bezogen auf die Gesamtmasse aller drei Fraktionen |
| CF+,CFm,CF- | prozentualer Massenanteil des Fortrons im positiv geladenen, Mittel- und negativ geladenen Gut bezogen auf die Masse der Einzelfraktion |
| CS+,CSm,CS- | prozentualer Massenanteil des Salzes im positiv geladenen, Mittel- und negativ geladenen Gut bezo- |

gen auf die Masse der Einzelfraktion

RF+,RFm,RF-  prozentualer Massenanteil des ausgetragenen Fortrons im positiv geladenen, Mittel- und negativ geladenen Gut bezogen auf die in allen drei Einzelfraktionen ausgetragene Fortron-Gesamtmasse

RS+,RSm,RS-  prozentualer Massenanteil des ausgetragenen Salzes im positiv geladenen, Mittel- und negativ geladenen Gut bezogen auf die in allen drei Einzelfraktionen ausgetragene Salz-Gesamtmasse

Die Versuche wurden mit einer Bürstendrehzahl von 900 min$^{-1}$ gefahren. Mit Hilfe des Elektrodenabstandes ergibt sich folgende Beziehung zwischen der angelegten Gleichspannung U und der Feldstärke E:

$$E / (MV/m) = 0,1 * U / kV$$

Tabelle 1:    Fortron G, Salz G

| Mischung F/S | v [m/S] | U [kV] | F/S | positiv geladenes Gut | | | Mittelgut | | | negativ geladenes Gut | | |
|---|---|---|---|---|---|---|---|---|---|---|---|---|
| | | | | M+ CS+ | CF+ | RF+ RS+ | Mm | CFm CSm | RFm RSm | M- CS- | CF- | RF- RS- |
| 50 : 50 | 40 | 25 | F | 24 | 89 | 43 | 39 | 56 | 44 | 37 | 18 | 13 |
| | | | S | | 11 | 5 | | 44 | 34 | | 82 | 61 |
| | 60 | 20 | F | 34 | 92 | 63 | 35 | 50 | 33 | 31 | 6 | 4 |
| | | | S | | 8 | 5 | | 50 | 37 | | 94 | 58 |
| | 60 | 25 | F | 25 | 86 | 43 | 51 | 52 | 53 | 24 | 8 | 4 |
| | | | S | | 14 | 7 | | 48 | 49 | | 92 | 44 |
| | 100 | 20 | F | 26 | 87 | 45 | 52 | 49 | 52 | 22 | 6 | 3 |
| | | | S | | 13 | 7 | | 51 | 52 | | 94 | 41 |
| 90:10 | 60 | 20 | F | 50 | 100 | 56 | 36 | 88 | 35 | 14 | 61 | 9 |
| | | | S | | 0 | 0 | | 12 | 45 | | 39 | 55 |
| 10:90 | 60 | 20 | F | 12 | 70 | 84 | 38 | 2 | 6 | 50 | 2 | 10 |
| | | | S | | 30 | 4 | | 98 | 42 | | 98 | 54 |

Beispiel 2:

Für die triboelektrische Trennung wurden folgende Proben eingesetzt:

Fortron® , ein Polyphenylensulfid erhältlich von der Fa. Fortron Industries, North Carolina, U.S.A.. Die Probe wies folgende Korngrößenverteilung auf:

$d_{10}$ = 11 um       $d_{50}$ = 20 µm       $d_{90}$ = 28 µm

Hier bedeutet $d_{xx}$ denjenigen Korndurchmesser, unterhalb dessen der Durchmesser von xx % der Gesamtprobe liegt. Diese Probe wird im folgenden mit Fortron A (FA) bezeichnet.

Außerdem Natriumchlorid mit der Korngrößenverteilung:

$d_{10}$=1,3µm       $d_{50}$=9µm       $d_{90}$ = 13 µm

Diese Probe wird mit Salz F1 (SF1), bezeichnet.

Tabelle 2 gibt die Versuchsergebnisse zur triboelektrischen Trennung von Gemischen dieser Substanzen im massenbezogenen Mischungsverhältnis FA/SF1 = 50:50 im Aufgabestrom, Tabelle 3 für ein massenbezogenes Mischungsverhältnis FA/SF1 = 30:70 im Aufgabestrom wieder. Hierbei ist die Bedeutung der Abkürzungen wie im Beispiel 1 erläutert.

Tabelle 2:

| Fortron A / Salz F1, Mischungsverhältnis FA/SF1 = 50:50 | | | | | | | | | | | |
|---|---|---|---|---|---|---|---|---|---|---|---|
| V [m/s] | U [kV] | | positiv geladenes Gut | | | Mittelgut | | | negativ geladenes Gut | | |
| | | | M+ | CF+ | RF+ | Mm | CFm | RFm | M- | CF- | RF- |
| | | | | CS+ | RS+ | | CSm | RSm | | CS- | RS- |
| 60 | 20 | F | 28 | 69 | 39 | 42 | 52 | 43 | 30 | 30 | 18 |
| | | S | | 31 | 17 | | 48 | 41 | | 70 | 42 |
| 60 | 25 | F | 24 | 66 | 32 | 40 | 58 | 46 | 36 | 30 | 22 |
| | | S | | 34 | 16 | | 42 | 34 | | 70 | 50 |
| 100 | 20 | F | 24 | 68 | 33 | 40 | 62 | 48 | 36 | 26 | 19 |
| | | S | | 32 | 15 | | 38 | 32 | | 74 | 53 |
| 100 | 25 | F | 30 | 70 | 42 | 40 | 52 | 42 | 30 | 26 | 16 |
| | | S | | 30 | 18 | | 48 | 38 | | 74 | 44 |
| 140 | 20 | F | 18 | 71 | 26 | 44 | 60 | 53 | 38 | 28 | 21 |
| | | S | | 29 | 10 | | 40 | 35 | | 72 | 55 |
| 140 | 25 | F | 21 | 68 | 29 | 46 | 62 | 56 | 33 | 23 | 15 |
| | | S | | 32 | 13 | | 38 | 36 | | 77 | 51 |

Tabelle 3:

| Fortron A / Salz F1, Mischungsverhältnis FA/SF1 = 30:70 | | | | | | | | | | | |
|---|---|---|---|---|---|---|---|---|---|---|---|
| V [m/s] | U [kV] | | positiv geladenes Gut | | | Mittelgut | | | negativ geladenes Gut | | |
| | | | M+ | CF+ | RF+ | Mm | CFm | RFm | M- | CF- | RF- |
| | | | | CS+ | RS+ | | CSm | RSm | | CS- | RS- |
| 60 | 20 | F | 28 | 54 | 48 | 40 | 28 | 35 | 38 | 14 | 17 |
| | | S | | 46 | 18 | | 72 | 40 | | 86 | 32 |
| 60 | 25 | F | 18 | 54 | 32 | 46 | 34 | 52 | 36 | 14 | 16 |
| | | S | | 46 | 13 | | 66 | 43 | | 86 | 44 |
| 140 | 20 | F | 17 | 57 | 31 | 37 | 44 | 52 | 46 | 11 | 17 |
| | | S | | 43 | 11 | | 56 | 30 | | 89 | 59 |
| 140 | 25 | F | 20 | 53 | 35 | 35 | 45 | 52 | 45 | 9 | 13 |
| | | S | | 47 | 13 | | 55 | 28 | | 91 | 59 |

**Patentansprüche**

1. Verfahren zur triboelektrischen Trennung von organischen Polymeren und Salzen, **dadurch gekennzeichnet, daß**

   a) das zu trennende Gemisch elektrisch aufgeladen wird,
   b) die aufgeladenen Partikel durch ein elektrisches Feld bewegt werden und
   c) die im elektrischen Feld unterschiedlich abgelenkten Partikel getrennt aufgefangen werden.

2. Verfahren zur triboelektrischen Trennung von organischen Polymeren und Salzen nach Anspruch 1, **dadurch gekennzeichnet, daß** die aufgeladenen Partikel senkrecht zur Feldrichtung bewegt werden.

3. Verfahren zur triboelektrischen Trennung von organischen Polymeren und Salzen nach einem der vorhergehenden Ansprüche, **dadurch gekennzeichnet, daß** der mittlere Korndurchmesser des zu trennenden Gemischs kleiner ist als 200 μm.

4. Verfahren zur triboelektrischen Trennung von organischen Polymeren und Salzen nach einem der vorhergehenden Ansprüche, **dadurch gekennzeichnet, daß** das Polymer ein schwefelhaltiges Polymer enthält.

5. Verfahren zur triboelektrischen Trennung von organischen Polymeren und Salzen nach Anspruch 4, **dadurch gekennzeichnet, daß** das Polymer Polyphenylensulfid enthält.

6. Verfahren zur triboelektrischen Trennung von organischen Polymeren und Salzen nach einem der vorhergehenden Ansprüche, **dadurch gekennzeichnet, daß** das Salz ein Halogenid oder Carboxylat der Alkalimetalle, der Erdalkalimetalle, des Ammoniums oder eines substituierten Ammoniums enthält.

7. Verfahren zur triboelektrischen Trennung von organischen Polymeren und Salzen nach Anspruch 6, **dadurch gekennzeichnet, daß** das Salz Natriumchlorid enthält.

8. Verfahren zur triboelektrischen Trennung von organischen Polymeren und Salzen nach einem der vorhergehenden Ansprüche, **dadurch gekennzeichnet, daß** die triboelektrische Aufladung in einer Bürstenkammer erfolgt.

9. Verfahren zur triboelektrischen Trennung von organischen Polymeren und Salzen nach einem der vorhergehenden Ansprüche, **dadurch gekennzeichnet, daß** die triboelektrische Trennung in einem Walzenscheider erfolgt.

10. Verfahren zur triboelektrischen Trennung von organischen Polymeren und Salzen nach Anspruch 9, **dadurch gekennzeichnet, daß** der Walzenscheider aufgebaut ist aus

a) zylindrischen Trennelektroden mit konvex gekrümmten Oberflächen, die in der jeweils dem Staubstrom zugewandten Seite eines Isolationskörpers eingebettet sind,
b) zylindrischen Abstoßelektroden mit konvex gekrümmten Oberflächen, die in der dem Staubstrom abgewandten Seite des Isolationskörpers eingebettet sind,
c) um die Isolationskörper rotierenden Walzen, welche die an der Trennelektrode abgeschiedenen Partikel den Abstoßelektroden zuführen.

11. Verfahren zur triboelektrischen Trennung von organischen Polymeren und Salzen nach Anspruch 9, **dadurch gekennzeichnet, daß** der Walzenscheider aufgebaut ist aus

a) elliptischen Trennelektroden, die in der jeweils dem Staubstrom zugewandten Seite eines Isolationskörpers eingebettet sind,
b) elliptischen Abstoßelektroden, die in der dem Staubstrom abgewandten Seite des Isolationskörpers eingebettet sind,
c) um die Isolationskörper rotierenden Walzen, welche die an der Trennelektrode abgeschiedenen Partikel den Abstoßelektroden zuführen.

**Claims**

1. A process for the triboelectric separation of organic polymers and salts, which comprises

a) electrically charging the mixture to be separated,
b) moving the charged particles through an electric field and
c) separately collecting the particles which are deflected differently in the electric field.

2. The process for the triboelectric separation of organic polymers and salts as claimed in claim 1, wherein the charged particles are moved perpendicularly to the field direction.

3. The process for the triboelectric separation of organic polymers and salts as claimed in either of the preceding claims, wherein the mean particle diameter of the mixture to be separated is less than 200 μm.

**4.** The process for the triboelectric separation of organic polymers and salts as claimed in any one of the preceding claims, wherein the polymer comprises a sulfur-containing polymer.

**5.** The process for the triboelectric separation of organic polymers and salts as claimed in claim 4, wherein the polymer comprises polyphenylene sulfide.

**6.** The process for the triboelectric separation of organic polymers and salts as claimed in any one of the preceding claims, wherein the salt comprises a halide or carboxylate of an alkali metal, an alkaline earth metal, ammonium or a substituted ammonium.

**7.** The process for the triboelectric separation of organic polymers and salts as claimed in claim 6, wherein the salt comprises sodium chloride.

**8.** The process for the triboelectric separation of organic polymers and salts as claimed in any one of the preceding claims, wherein the triboelectric charging is carried out in a brush chamber.

**9.** The process for the triboelectric separation of organic polymers and salts as claimed in any one of the preceding claims, wherein the triboelectric separation is carried out in a roll separator.

**10.** The process for the triboelectric separation of organic polymers and salts as claimed in claim 9, wherein the roll separator comprises

a) cylindrical separation electrodes having convexly curved surfaces which are embedded in an insulating body on the side facing the dust stream,
b) cylindrical stripping electrodes having convexly curved surfaces which are embedded in the insulating body on the side facing away from the dust stream,
c) rolls which rotate around the insulating bodies and convey the particles deposited on the separation electrode to the stripping electrodes.

**11.** The process for the triboelectric separation of organic polymers and salts as claimed in claim 9, wherein the roll separator comprises

a) elliptical separation electrodes which are embedded in an insulating body on the side facing the dust stream,
b) elliptical stripping electrodes which are embedded in the insulating body on the side facing away from the dust stream,
c) rolls which rotate around the insulating bodies and convey the particles deposited on the separation electrode to the stripping electrodes.

**Revendications**

**1.** Procédé de séparation triboélectrique de polymères et de sels organiques, **caractérisé en ce que**

a) le mélange à séparer est chargé par voie électrique,
b) les particules chargées sont mues à travers un champ électrique et
c) les particules déviées de manières diverses dans le champ électrique sont recueillies séparément.

**2.** Procédé de séparation triboélectrique de polymères et de sels organiques selon la revendication 1, **caractérisé en ce que** les particules chargées sont mues perpendiculairement à la direction du champ.

**3.** Procédé de séparation triboélectrique de polymères et de sels organiques selon l'une quelconque des revendications précédentes, **caractérisé en ce que** le diamètre de grain moyen du mélange à séparer est inférieur à 200 microns.

**4.** Procédé de séparation triboélectrique de polymères et de sels organiques selon l'une quelconque des revendications précédentes, **caractérisé en ce que** le polymère contient un polymère contenant du soufre.

**5.** Procédé de séparation triboélectrique de polymères et de sels organiques selon la revendication 4, **caractérisé**

**en ce que** le polymère contient un sulfure de polyphénylène.

6. Procédé de séparation triboélectrique de polymères et de sels organiques selon l'une quelconque des revendications précédentes, **caractérisé en ce que** le sel est un halogénure ou un carboxylate des métaux alcalins, des métaux alcalino-terreux, de l'ammonium ou d'un ammonium substitué.

7. Procédé de séparation triboélectrique de polymères et de sels organiques selon la revendication 6, **caractérisé en ce que** le sel contient du chlorure de sodium.

8. Procédé de séparation triboélectrique de polymères et de sels organiques selon l'une quelconque des revendications précédentes, **caractérisé en ce que** le chargement triboélectrique se fait dans une chambre à brosses.

9. Procédé de séparation triboélectrique de polymères et de sels organiques selon l'une quelconque des revendications précédentes, **caractérisé en ce que** la séparation triboélectrique se fait dans un séparateur à tambour.

10. Procédé de séparation triboélectrique de polymères et de sels organiques selon la revendication 9, **caractérisé en ce que** le séparateur à tambour est construit à partir

   a) d'électrodes de séparation cylindriques à surfaces courbées de manière convexe, qui sont noyées dans le côté d'un corps d'isolation, tourné à chaque fois vers le courant de poussières ;
   b) d'électrodes de répulsion cylindriques à surfaces courbées de manière convexe, qui sont noyées dans le côté du corps d'isolation, tourné dans la direction opposée au courant de poussières ;
   c) de rouleaux tournant autour des corps d'isolation, qui conduisent les particules déposées aux électrodes de séparation vers les électrodes de répulsion.

11. Procédé de séparation triboélectrique de polymères et de sels organiques selon la revendication 9, **caractérisé en ce que** le séparateur à tambour est construit à partir

   a) d'électrodes de séparation elliptiques, qui sont noyées dans le côté d'un corps d'isolation, tourné à chaque fois vers le courant de poussières ;
   b) d'électrodes de répulsion elliptiques, qui sont noyées dans le côté du corps d'isolation, tourné dans la direction opposée au courant de poussières ;
   c) de rouleaux tournant autour des corps d'isolation, qui conduisent les particules déposées aux électrodes de séparation vers les électrodes de répulsion.